Europäisches Patentamt

European Patent Office

Office européen des brevets

(19)

(11) Publication number: **0 069 404**
**B1**

# EUROPEAN PATENT SPECIFICATION

(45) Date of publication of the patent specification:
**01.08.84**

(51) Int. Cl.³: **F 24 J 3/02,** F 28 D 15/00

(21) Application number: **82200569.0**

(22) Date of filing: **11.05.82**

(54) **Heat transport device comprising a sealed and evacuated tube.**

(30) Priority: **20.05.81 NL 8102467**

(43) Date of publication of application:
**12.01.83 Bulletin 83/2**

(45) Publication of the grant of the patent:
**01.08.84 Bulletin 84/31**

(84) Designated Contracting States:
**DE FR GB IT NL SE**

(56) References cited:
**DE - A - 2 631 320**
**US - A - 3 738 421**
**US - A - 4 063 419**

(73) Proprietor: **N.V. Philips' Gloeilampenfabrieken,**
**Groenewoudseweg 1, NL-5621 BA Eindhoven (NL)**

(72) Inventor: **Bloem, Herman c/o INT.OCTROOIBUREAU**
**B.V., Prof. Holstlaan 6, NL-5656 AA Einhoven (NL)**

(74) Representative: **Melio, Jan Dirk et al, INTERNATIONAAL**
**OCTROOIBUREAU B.V. Prof. Holstlaan 6, NL-5656 AA**
**Eindhoven (NL)**

## Description

The invention relates to a heat transport device, comprising a sealed and evacuated tube which contains a heat transport medium which evaporates in a heated section of the tube during operation and which condenses in a cooled section of the tube, the heat transport medium being water which contains a small amount of a hydroxide which is still sufficiently soluble in water at 0°C.

A heat transport device of the kind set forth is known from "Proceedings of the 13th Intersociety Energy Conversion Engineering Conference", August 20–25, 1978, pages 1050–1054.

This kind of heat transport device is particularly suitable for use in solar collectors for transporting the heat collected by the absorber to a medium to be heated.

The use of water as the heat transport medium in these devices offers the advantage that water has a very high heat transport capacity in comparison with other media.

However, the use of water as the heat transport medium also has some drawbacks.

First of all, at temperatures below 0°C there is the risk of the tube breaking due to freezing; such breaking is liable to occur even when the amount of water in the tube is small.

A second drawback consists in that delay of boiling occurs at lower operating temperatures, i.e. the heat transport medium starts to boil only at a temperature which is substantially higher than the boiling point associated with the pressure prevailing in the tube. This has an adverse effect on the operation and may even cause overheating of some parts of the device in which the heat transport device is incorporated.

Finally, a third drawback consists in that at temperatures which are normal, for example, for solar collectors small amounts of residual gases occupy a large volume due to the low pressure in the tube. Such residual gases collect in the condenser and exclude part of the condenser surface area from the transfer of heat.

The first drawback, i.e. the risk of freezing, can be eliminated in known manner by the addition of suitably soluble chemicals to the water in order to lower the freezing point. For example, in practice it is known to add a small amount of sodium hydroxide to the water. A lubrication effect from concentrated dissolved substance then occurs between the ice crystals formed, so that the ice crystals can slide along one another and no solid plugs are formed.

No satisfactory solution has hitherto been found for the other two drawbacks.

It is an object of the invention to provide a heat transport device which contains a heat transport medium such that no breakage due to freezing is avoided, that no delay of boiling occurs and that substantially no residual gases occur in the tube.

In order to achieve this object, the device in accordance with the invention is characterized in that the hydroxide added to the water is at least partly formed by a hydroxide of one of the metals with which are insoluble in the heat transport medium (3) and carbonates which are thermally stable at the elevated temperatures liable to occur in solar collectors.

In a preferred embodiment, the hydroxide is formed at least partly by a hydroxide of Ba, Ca or Sr.

Hydroxides of the metals Na, K and Ba offer a suitable protection against breaking due to freezing, because these hydroxides are still sufficiently soluble in water at 0°C. In practice, such hydroxides always contain a small amount of carbonates. The carbonates of Na and K are not thermally stable at the elevated temperatures liable to occur in solar collectors (from 200 to 300°C) and give off $CO_2$ at these temperatures. As has already been explained, this residual gas disturbs the operation of the device. A very long period of time is required before the $CO_2$ formed is dissolved again in the hydroxide.

The described residual gas problem is substantially completely eliminated by the addition of barium hydroxide to the water, because barium carbonate is thermally stable at the elevated temperatures liable to occur in solar collectors, so that no $CO_2$ is formed. Furthermore barium hydroxide is still sufficiently soluble in water at 0°C in order to provide protection against breaking due to freezing.

The residual gas problem can be eliminated and a protection against breaking due to freezing can alternatively be achieved by adding to the water mainly Na or K hydroxide and also a small amount of Ba, Ca or Sr hydroxide. Should any $CO_2$ be formed, it will be bound by the Ba, Ca or Sr and a thermally stable and insoluble carbonate will be formed. This carbonate does not disturb the operation of the device. A mixture of 0.1 M sodium hydroxide and a small amount of Ba, Ca or Sr hydroxide offers excellent results in practice.

It has also been found that in the presence of a small amount of Ba, Ca or Sr hydroxide, a small amount of insoluble Ba, Ca or Sr carbonate is formed when the tube is filled. These carbonates probably form enough "bolding nuclei" to counteract the undesirable delay of boiling.

A preferred embodiment of the device in accordance with the invention is characterized in that the heat transport medium contains a very small amount of carbonate of one or more of the metals barium, calcium or strontium.

It appears from the foregoing that when use is made of $Ba(OH)_2$, Na or K hydroxide need not be present in the water, because $Ba(OH)_2$ is still sufficiently soluble in water at 0°C to counteract breaking due to freezing. This is not the case with Ca and Sr hydroxide which must always be used in combination with NaOH or KOH in view of their low solubility at 0°C. Even a combination of these hydroxides and barium hydroxide is possible. All these combinations simultaneously solve the three problems: protection against breaking due to freezing, formation of residual gas, occurrence of delay of boiling.

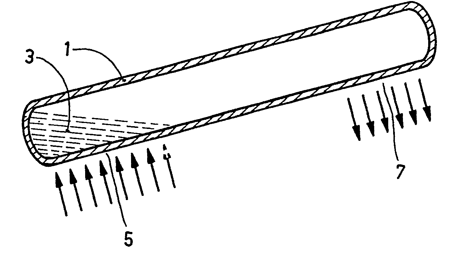

The drawing shows, by way of exemple, a diagrammatic sectional view of a heat transport device.

The heat transport device comprises a tube 1. The tube 1 contains a heat transport medium 3.

Heat is applied to a section 5 of the tube. The heat transport medium thus evaporates and flows as a vapour to a section 7 of the tube which is cooled, so that the vapour condenses therein. The condensed medium subsequently returns to the section 5 under the influence of gravity. When the tube is arranged in a horizontal position, the inner wall may comprise a porous layer, for example, a layer of gauze so that the condensate is returned to the section 5 under the influence of the capillary forces in the layer.

The tube itself is made of copper or silver or alloys thereof with other metals.

The heat transport medium 3 is a mixture of water and a small amount of turbid barite water.

It is thus achieved that there is no risk of breaking of the tube due to freezing, that no residual gas is formed and that substantially no delay of boiling occurs.

A heat transport device is thus obtained which offers the described advantages and which, moreover, is not more expensive than the known devices.

Instead of barite water, an amount of sodium or potassium hydroxide (0.1 M) and a small amount of barium, calcium or strontium hydroxide may be added to the water. Actually a large number of variations are feasible, but in order to prevent breaking due to freezing, an adequate amount of dissolved Na, K or Ba hydroxide or mixtures thereof must be present in the water. In order to prevent the occurrence of residual gases, always at least a small amount of Ba, Ca or Sr hydroxide must be present. Any residual gases formed are then bound to form insoluble and thermally stable carbonates. In order to prevent delay of boiling, a small amount of Ba, Ca or Sr carbonate or mixtures thereof must be present in the water.

## Claims

1. A heat transport device which is suitable for use in solar collectors and which comprises a sealed and evacuated tube (1) which contains a heat transport medium (3) which evaporates in a heated section (5) of the tube (1) during operation and which condenses in a cooled section (7) of the tube, the heat transport medium (3) being water in which there is dissolved a small amount of hydroxide which is still sufficiently soluble in water at 0°C, characterized in that the hydroxide consists at least partly of a hydroxide of one of the metals with carbonates which are insoluble in the heat transport medium (3) and which are thermally stable at the elevated temperatures liable to occur in solar collectors.

2. A heat transport device as claimed in Claim 1, characterized in that the hydroxide is formed at least partly by a hydroxide of one or more of the metals barium, calcium or strontium.

3. A heat transport device as claimed in Claim 1 or 2, characterized in that the concentration of hydroxide in the water is between 0.05 M and 0.1 M.

4. A heat transport device as claimed in any of Claims 1, 2 or 3, characterized in that the heat transport medium (3) contains a very small amount of carbonate of one or more of the metals barium, calcium or strontium.


## Revendications

1. Dispositif de transport de chaleur comportant un tube (1) scellé et vidé, contenant un fluide de transport de chaleur (3) qui s'évapore en régime dans une partie chauffée du tube et qui se condense dans une partie refroidie (7) du tube, le fluide de transport de chaleur (3) étant formé par de l'eau contenant une petite quantité d'hydroxyde suffisamment soluble à l'eau à 0°C, caractérisé en ce que l'hydroxyde ajouté à l'eau est au moins partiellement formé par un hydroxyde de l'un des métaux, avec des carbonates insolubles dans le fluide de transport de chaleur et thermiquement stables aux températures élevées pouvant se produire dans les collecteurs solaires.

2. Dispositif de transport de chaleur selon la revendication 1, caractérisé en ce que l'hydroxyde est formé au moins partiellement par un hydroxyde d'au moins l'un des métaux baryum, calcium ou strontium.

3. Dispositif de transport de chaleur selon la revendication 1 ou 2, caractérisé en ce que la concentration en hydroxyde dans l'eau est comprise entre 0,05 M et 0,1 M.

4. Dispositif de transport de chaleur selon l'une des revendications 1, 2 ou 3, caractérisé en ce que le fluide de transport de chaleur (3) contient une très petite quantité de carbonate d'au moins l'un des métaux baryum, calcium ou strontium.


## Patentansprüche

1. Wärmetransportvorrichtung geeignet zum Gebrauch in Sonnenkollektoren mit einem luftdicht verschlossenen und evakuierten Rohr (1), das ein Wärmetransportmedium (3) enthält, welches im Betrieb in einem erwärmten Teil (5) des Rohres (2) verdampft und in einem gekühlten Teil (7) des Rohres kondensiert, wobei das Wärmetransportmedium (3) Wasser ist, worin eine geringe Menge bei 0°C noch in ausreichendem Masse in Wasser lösliches Hydroxyd gelöst ist, dadurch gekennzeichnet, dass das Hydroxyd wenigstens teilweise besteht aus einem Hydroxyd eines der Metalle, mit Karbonaten, die in dem Wärmetransportmedium (3) unlöslich sind und die bei den höheren Temperaturen, die in Sonnenkollektoren auftreten können, thermisch stabil sind.

2. Wärmetransportvorrichtung nach Anspruch 1, dadurch gekennzeichnet, dass das Hydroxyd wenigstens teilweise durch ein Hydroxyd eines oder mehrerer der Metalle Barium, Kalzium oder Strontium gebildet ist.

3. Wärmetransportvorrichtung nach einem der beiden Ansprüche 1 oder 2, dadurch gekennzeichnet, dass die Konzentration des Hydroxyds in dem Wasser zwischen 0,05 M und 0,1 M liegt.

4. Wärmetransportvorrichtung nach einem der Ansprüche 1, 2 oder 3, dadurch gekennzeichnet, dass das Wärmetransportmedium (3) eine sehr geringe Menge Karbonat eines oder mehrerer der Metalls Barium, Kalzium oder Strontium enthält.